# EUROPEAN PATENT APPLICATION

(11) **EP 2 290 728 A1**
(43) Date of publication of application: **02.03.2011**
(21) Application number: 10008859.0
(22) Date of filing: 25.08.2010
(51) Int. Cl.: H01M 2/10, H01M 10/50

(54) **Battery pack**

(30) Priority: 26.08.2009 JP 2009196095
(71) Applicant: SANYO ELECTRIC CO., LTD., Moriguchi City, Osaka 570-8677 (JP)
(72) Inventor: Yoneda, Haruhiko, Moriguchi City Osaka, 570-78677 (JP); Haino, Masami, Moriguchi City Osaka, 570-78677 (JP)
(74) Representative: Kotitschke, Bernd

(57) **Abstract**

The battery pack has battery blocks 10 housed in a battery case 3, and each battery block 10 has a plurality of batteries 1, which can be charged, disposed in fixed positions in a battery holder 2. The battery pack has a plurality of battery blocks 10 disposed at given intervals in the battery case 3, and hollow partitions 32 enclosing hollow regions 33 open at the battery case 3 surfaces are provided between adjacent battery blocks 10. The battery blocks 10 are disposed in a manner thermally coupled with the hollow partitions 32.

## Description

### BACKGROUND OF THE INVENTION

### 1. Field of the Invention

The present invention relates to a battery pack having many batteries disposed in multiple rows and columns, and in particular to a battery pack optimal for use on-board an electric vehicle such as an electric motor-bike (e.g. electric motor scooter and electric motorcycle) as a power source to supply high power to a driving motor.

### 2. Description of the Related Art

A battery pack used in high power applications such as in an electric motor-bike has many batteries disposed in multiple rows and columns connected in series and parallel. This type of battery pack has a plurality of batteries connected in series to increase output voltage, and connected in parallel to increase output current. A battery pack used in high output applications is charged and discharged with high currents causing battery temperature to rise. Battery electrical characteristics change with temperature. If temperature differences develop in a battery pack housing a plurality of batteries, those temperature differences result in non-uniform battery characteristics. Battery characteristic non-uniformity accelerates degradation of a given battery, and shortens the life-time of the entire battery pack. This is because battery characteristic non-uniformity causes remaining battery capacity differences, and remaining battery capacity differences make it easy to overcharge or over-discharge a given battery. Since battery degradation is accelerated by over-charging and over-discharging, a given battery degrades under these conditions and the life-time of the entire battery pack is shortened.

In particular, in a battery pack housing many batteries, a plurality of batteries is connected as a battery block, and a plurality of battery blocks is housed in a battery case. This type of structure has the drawback that temperature differences can easily develop between battery blocks, and battery temperature in the battery block disposed at the center of the battery case becomes particularly high.

To resolve this drawback, a battery pack provided with cooling air passageways between battery blocks has been developed. (Refer to Japanese Laid-Open Patent Publication H10-21891 [1998].)

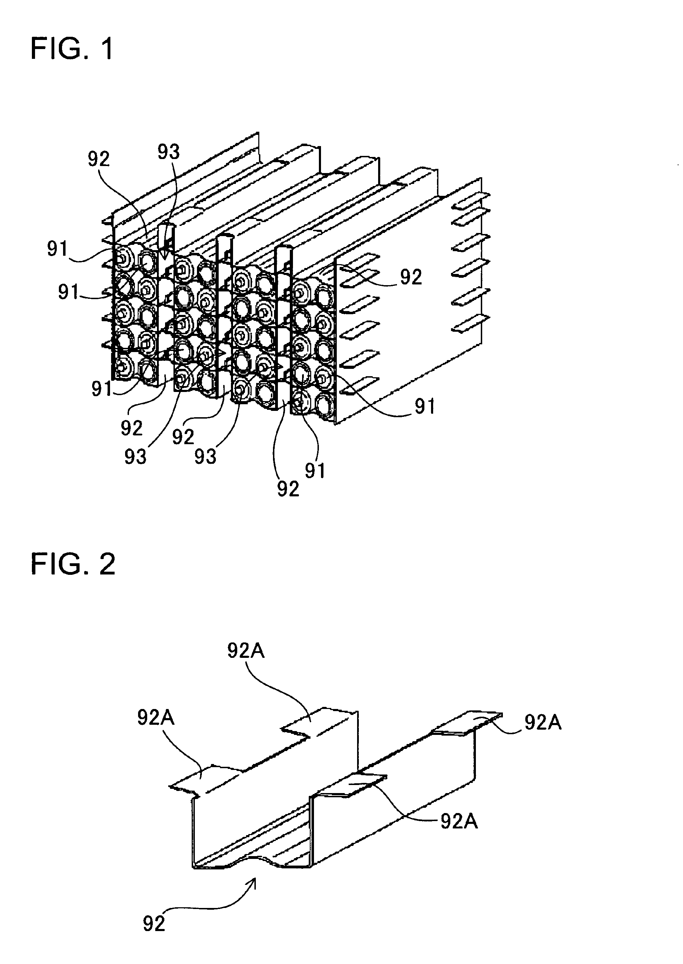

As shown in Fig. 1, the battery pack of JP H10-21891-A is provided with cooling medium passageways 93 between arrangements of two columns of batteries 91. To establish cooling medium passageways 93 between batteries 91 arranged in two column blocks, the trough-shaped battery holding material 92 shown in Fig. 2 is stacked in multiple layers. The battery holding material 92 is sheet metal with insulated surfaces formed in a trough-shape having a width and height that can hold batteries 91 arranged in two columns. Further, the battery holding material 92 is provided with tabs 92A projecting outward from the upper edges of both side-walls, and these tabs 92A are connected to establish the cooling medium passageways 93 between the two column blocks of batteries 91.

In this battery pack, cooling medium is supplied to the cooling medium passageways 93 to cool the batteries 91 via the battery holding material 92. Consequently, a plurality of battery blocks can be housed in the battery case while reducing temperature differences between battery blocks. However, this battery pack has the drawback that it has a complex structure, fabrication is difficult, and manufacturing cost is high. In addition, since the cooling medium passageways are vertically partitioned by the battery holding material tabs, it has the drawback that a system utilizing the free convection of ambient air in the cooling medium passageways cannot reduce the temperature differences in all the battery blocks. Further, since batteries in this battery pack are disposed in multiple layers by connecting battery holding material tabs and stacking the battery holding material, a structure that holds many batteries has the drawback that the relative positions of the batteries can easily shift. Accordingly, it is difficult to hold many batteries in precise positions in the case, there are large dimensional errors in the battery pack outline and shape distortion, and it is difficult to reduce battery temperature differences while assembling the battery pack with precision.

The present invention was developed with the object of correcting the battery pack drawbacks described above. Thus, it is a primary object of the present invention to provide a battery pack that can reduce battery temperature differences of the battery blocks housed in the battery case while having an extremely simple structure that can be inexpensively manufactured in quantity. Further, it is another important object of the present invention to provide a battery pack that can effectively dissipate heat retained between the plurality of battery blocks even utilizing free convection, can dispose many batteries in precise positions, can reduce outline dimensional errors and shape distortion, and can reduce battery temperature differences while assembling the battery pack with precision.

### SUMMARY OF THE INVENTION

The battery pack of the present invention has battery blocks 10 housed in a battery case 3, and each battery block 10 has a plurality of batteries 1, which can be charged, disposed in fixed positions in a battery holder 2. The battery pack has a plurality of battery blocks 10 disposed at given intervals in the battery case 3, and hollow partitions 32 enclosing hollow regions 33 open at the battery case 3 surfaces are provided between adjacent battery blocks 10. The battery blocks 10 are disposed in a manner thermally coupled with the hollow partitions 32.

The battery pack described above has the characteristic that it can reduce battery temperature differences of the battery blocks housed in the battery case while having an extremely simple structure that can be inexpensively manufactured in quantity. Further, it has the characteristic that it can effectively dissipate heat retained between the plurality of battery blocks even by free convection of air or another cooing medium, can dispose many batteries in precise positions, can reduce outline dimensional errors and shape distortion, and can reduce battery temperature differences while implementing a structure that can be assembled with precision. This is because a plurality of battery blocks having a plurality of batteries disposed in fixed positions in battery holders are inserted in a battery case divided by hollow partitions enclosing hollow regions open at battery case surfaces, and the battery blocks are disposed with the hollow partitions between and thermally coupled with adjacent battery blocks. The hollow partitions dispose the battery blocks in fixed positions while thermally coupling with each battery block to efficiently cool the battery blocks and reduce battery temperature differences. In particular, heat generated by batteries disposed in the center region of the battery case is efficiently dissipated from the hollow partitions thermally coupled with the battery blocks to prevent temperature rise.

In the battery pack of the present invention, the battery case 3 can be filled with potting resin 7 to thermally couple the battery blocks 10 and the battery case 3. In this battery pack, the battery blocks can be thermally coupled in an ideal manner with the battery case via the potting resin. In particular, this battery pack has the characteristic that potting resin thermally couples batteries that make up the battery blocks with the battery case having hollow partitions to further reduce battery temperature differences.

In the battery pack of the present invention, a plurality of battery blocks 10 are housed in parallel orientation in the battery case 3 and hollow partitions 32 are provided between adjacent battery blocks 10. This battery pack can assemble many batteries in a high density while reducing battery temperature differences.

In the battery pack of the present invention, the hollow partitions 32 can be established in a manner connecting to the bottom surface 31 of the battery case 3. In this battery pack, battery blocks can be simply and easily disposed in regions separated by the hollow partitions, and battery block battery heat can be efficiently dissipated by the hollow partitions.

The battery pack of the present invention is provided with a connecting plate 40 that connects a plurality of battery blocks 10. The connecting plate 40 connects the battery blocks 10 housed in the battery case 3 and is configured to mate with the hollow partitions 32 to dispose the connecting plate 40 in a fixed position in the battery case 3. In this battery pack, a plurality of battery blocks can be connected as a unit and housed in the battery case via the connecting plate.

In the battery pack of the present invention, each battery block 10 is provided with a circuit board 5, and the circuit boards 5 can be disposed between the battery blocks 10 and the connecting plate 40. In this battery pack, the circuit boards mounted on the battery blocks can be housed in the battery case while being protected by the connecting plate.

In the battery pack of the present invention, each battery holder 2 can be configured as a pair of separate holder units 2A, and the ends of each battery 1 can be inserted in insertion sections 21 in the separate holder units 2A to dispose the batteries 1 in fixed positions. Further, fasteners 23 can be provided to fix the relative connecting position of a pair of holder units 2A, and the battery pack can be configured to join each pair of holder units 2A via the fasteners 23 while establishing flow gaps 24 that pass potting resin 7 through opposing surfaces of the holder units 2A. Each pair of holder units 2A can be joined via fasteners 23 establishing flow gaps 24, and potting resin introduced into the battery case 3 can flow through the flow gaps 24 into each holder unit 2A insertion section 21. In this battery pack, potting resin can quickly fill the space between the batteries and the battery holders without vacancies, and can thermally couple the batteries to the battery case in an ideal manner. Further, this battery pack has the characteristic that potting resin can quickly fill the space between the battery blocks and the battery case without vacancies.

In the battery pack of the present invention, the fasteners 23 can be connecting bosses 23X that protrude from opposing surfaces of a pair of holder units 2A. The connecting bosses 23X on one side can be inserted in the connecting bosses 23X on the other side to join the pair of holder units 2A in a manner that establishes flow gaps 24. In this battery pack, pairs of holder units can be connected in set positions while space between batteries and battery holders can be smoothly filled with potting resin to thermally couple the batteries and the battery case in an ideal manner.

The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a prior art battery pack;
Fig. 2 is an oblique view of the battery holding material for the battery pack shown in Fig. 1;
Fig. 3 is an oblique view of a battery pack for the first embodiment of the present invention;
Fig. 4 is a cross-section through the line IV-IV of the battery pack shown in Fig. 3;
Fig. 5 is a cross-section through the line V-V of the battery pack shown in Fig. 4;
Fig. 6 is an exploded oblique view of the battery pack shown in Fig. 3;
Fig. 7 is an oblique view from below of the battery pack shown in Fig. 6;
Fig. 8 is an exploded oblique view of the battery case, the battery blocks, and the connecting plate of the battery pack shown in Fig. 3;
Fig. 9 is an oblique view of a battery block;
Fig. 10 is a vertical cross-section of the battery block shown in Fig. 9;
Fig. 11 is an exploded oblique view of the battery block shown in Fig. 9;
Fig. 12 is an exploded oblique view of the battery holder of the battery block shown in Fig. 11;
Fig. 13 is a cross-section through the line XII-XII of the battery block shown in Fig. 10;
Fig. 14 is a front view from the inside of a holder unit of the battery holder shown in Fig. 12;
Fig. 15 is an oblique view of the battery case; and
Fig. 16 is an oblique view from below of the connecting plate.

### DETAILED DESCRIPTION OF THE EMBODIMENT(S)

The following describes embodiments of the present invention based on the figures.

The battery pack of the present invention is primarily installed on-board an electric motor-bike to supply power to a motor that drives the bike. In particular, since the present invention has many batteries arrayed in multiple rows and columns to increase output, it is optimal for use in high output applications such as an electric vehicle. Accordingly, the battery pack of the present invention is most suitable for use as a power source in an electric vehicle such as an electric motor-bike (including an electric motor scooter and an electric motorcycle), a bicycle with electrical-assist, an electric wheel-chair, an electric three-wheeled vehicle, and an electric go-cart. The following describes in detail embodiments of a battery pack used in an electric motor-bike. However, the battery pack of the present invention is in no way limited to electric motor-bike applications.

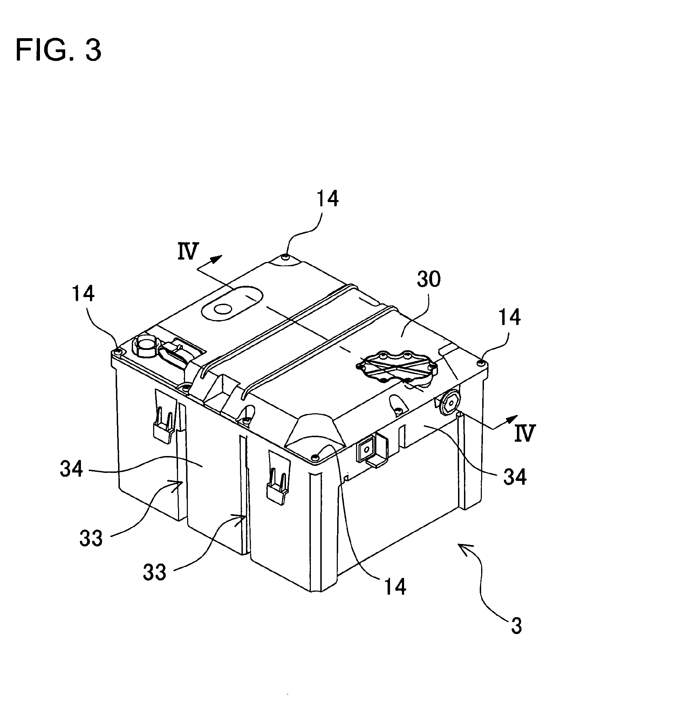

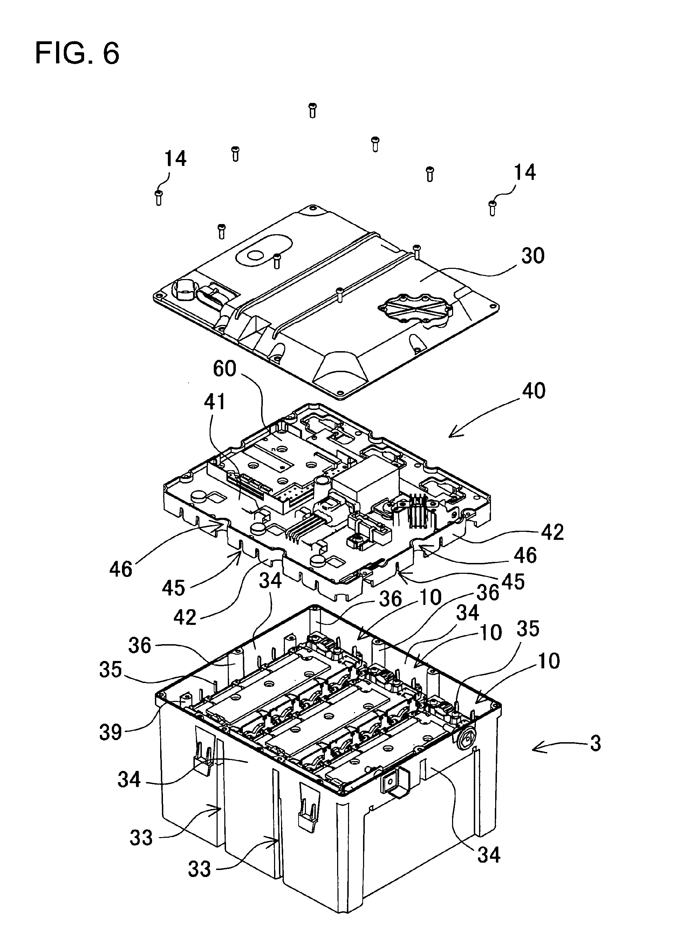

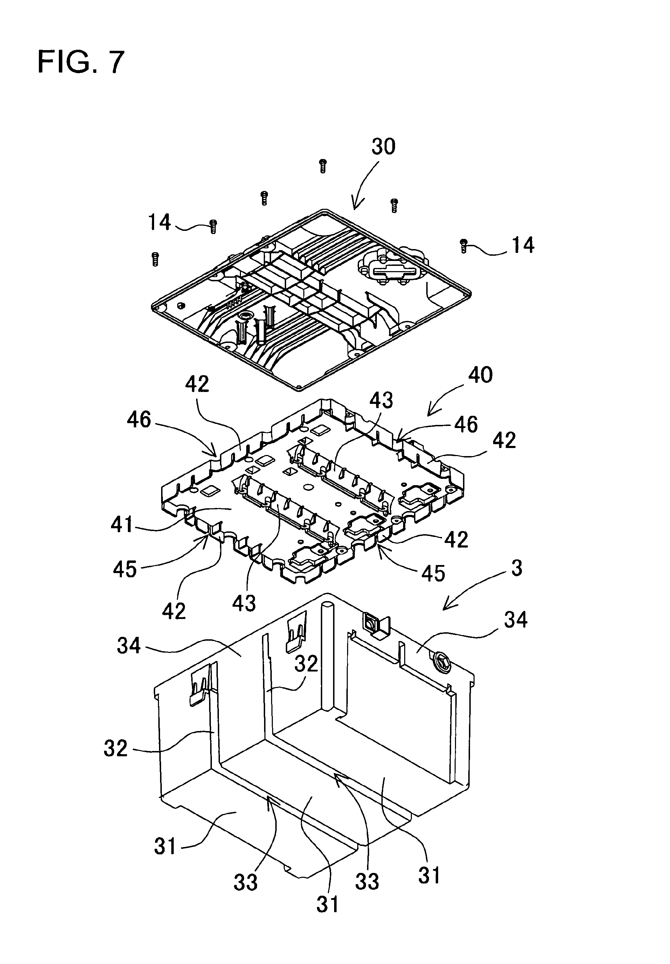

The battery pack of Figs. 3-8 has a plurality of batteries 1 disposed in multiple rows and columns in battery holders 2 to form battery blocks 10, and a plurality of battery blocks 10 are housed in a battery case 3. The battery pack of the figures has three battery blocks 10 arranged in three parallel rows inside the battery case 3.

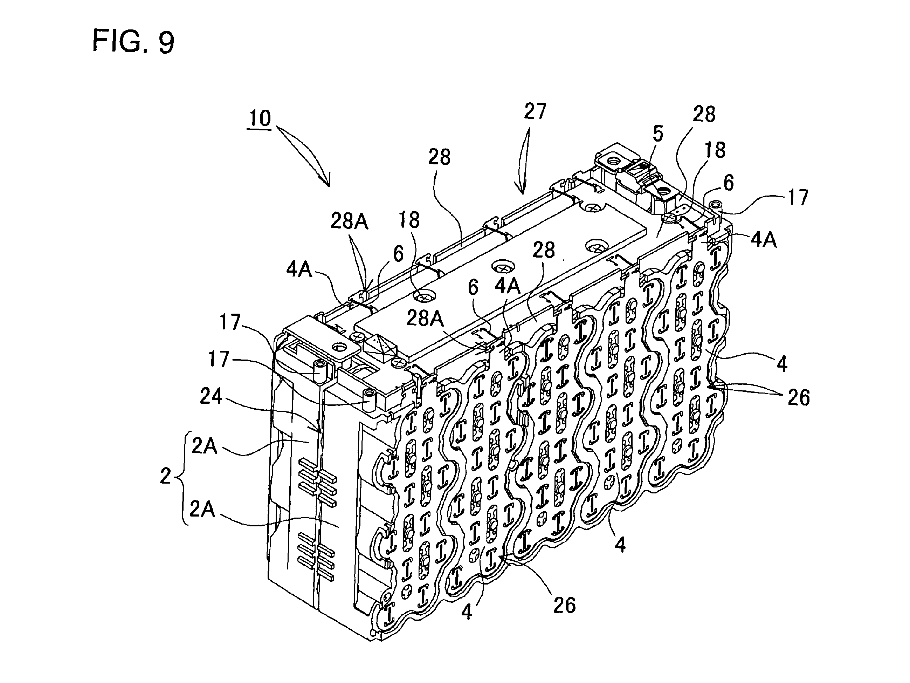

As shown in Figs. 9-13, a battery block 10 is provided with a plurality of batteries 1 that can be charged, and a battery holder 2 that disposes the batteries 1 in multiple rows and columns, and in parallel orientation. In addition, the battery block 10 of the figures is provided with a circuit board 5 connected to the batteries 1 via lead-plates 4, and the circuit board 5 is disposed in a fixed position on the battery holder 2.

The batteries 1 are lithium ion rechargeable batteries. However, the batteries can also be nickel-hydride batteries or nickel-cadmium batteries. Further, although the batteries 1 in the battery pack of the figures are circular cylindrical batteries the batteries can also be rectangular batteries. The battery block 10 of the figures has batteries arranged in parallel orientation in multiple rows and columns, and the battery holder 2 retains each battery 1 in a fixed position with the end planes of each battery 1 aligned in the same plane. The battery block 10 of the figures has a plurality of batteries 1 arranged in parallel orientation with ten batteries 1 arranged in a row and stacked in six rows to make a total array of sixty batteries 1. Specifically, the battery block 10 disposes batteries 1 in an array of six rows and ten columns. The battery block 10 of the figures has vertically adjacent batteries 1 offset to fill the valleys between batteries 1 and dispose the batteries 1 in zigzagging vertical columns. Although the battery block 10 of the figures disposes batteries 1 in six rows and ten columns, the present invention does not limit the number of batteries or the battery array configuration of the battery blocks.

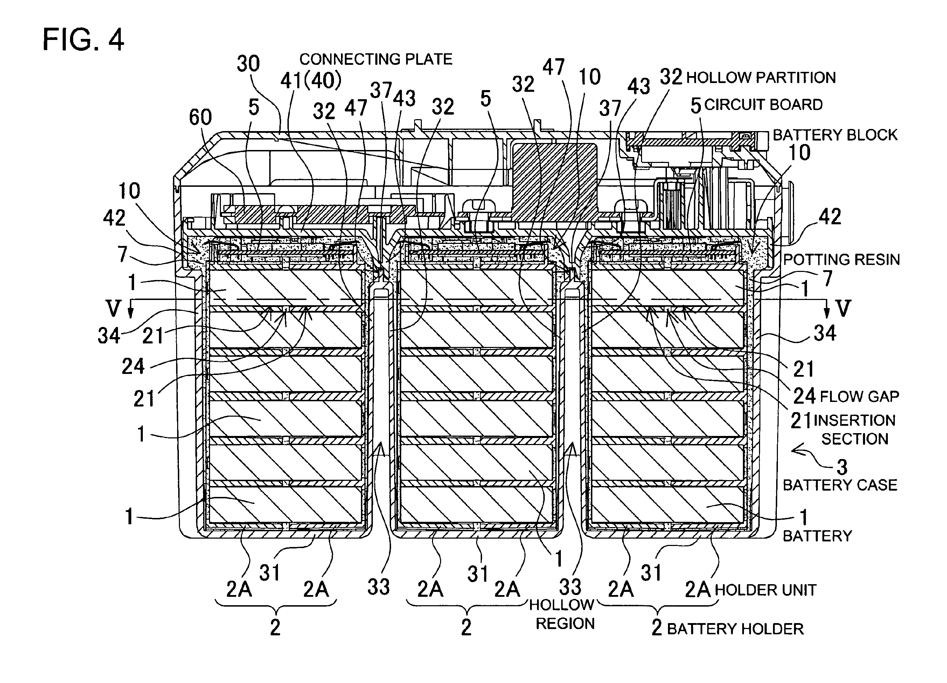

The battery pack of Figs. 4-6 and 8 has three battery blocks 10 housed in the battery case 3. Therefore, the battery pack is provided with a total of 180 batteries 1. However, the battery pack of the present invention does not specify the number of battery blocks housed in the battery case, and these types of specifications are set to numbers optimal for the application.

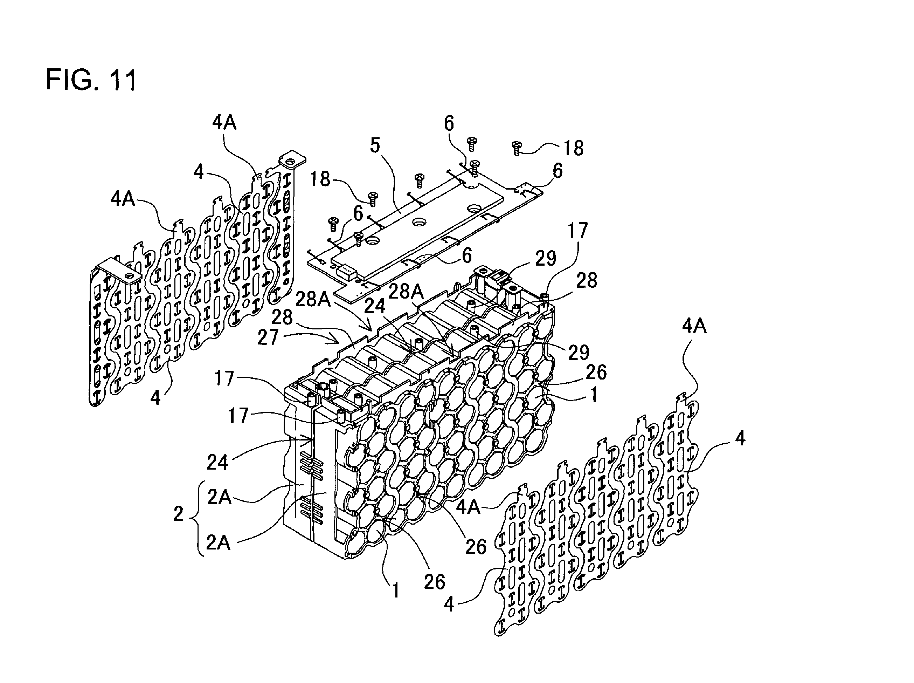

A plurality of batteries 1 are connected in series and parallel by weld-attaching lead-plates 4 to both ends of each battery 1. The lead-plates 4 connect batteries 1 in the same row in series, and connect batteries 1 disposed in the same zigzagging column in parallel. The lead-plates 4 are metal plates welded to the electrode terminals at the ends of the batteries 1 to connect batteries 1 in the same column parallel. Since the battery block 10 of Figs. 9-12 has batteries 1 in the same column disposed in a zigzag pattern, the lead-plates 4 also have a zigzag shape. A lead-plate 4 that connects batteries 1 in adjacent columns in series has a zigzag shape and a width that can connect two columns of batteries 1 together. In the battery block 10 of Fig. 11, lead-plates 4 connect ten batteries 1 in series and six batteries 1 in parallel. Specifically, sixty batteries 1 are connected ten in series and six in parallel by the lead-plates 4. The output voltage of the battery pack can be adjusted by the number of batteries 1 connected in series, and the output current can be adjusted by the number of batteries 1 connected in parallel. Since the battery block 10 of the figures has ten batteries 1 connected in series, output voltage is ten times the battery voltage. Accordingly, a battery block 10 that uses lithium ion batteries with a specified voltage of 3.7V has an output voltage of 37V.

In the battery block 10 of the figures, each lead-plate 4 is connected to the circuit board 5 mounted on the battery holder 2. This allows protection circuitry (not illustrated) on the circuit board 5 to detect the voltage of each battery 1. Each lead-plate 4 is provided with a connecting tab 4A protruding from one end that connects to the circuit board 5. Each lead-plate 4 has a lead-wire 6 connected to the connecting tab 4A to connect the lead-plates 4 to the circuit board 5 protection circuitry.

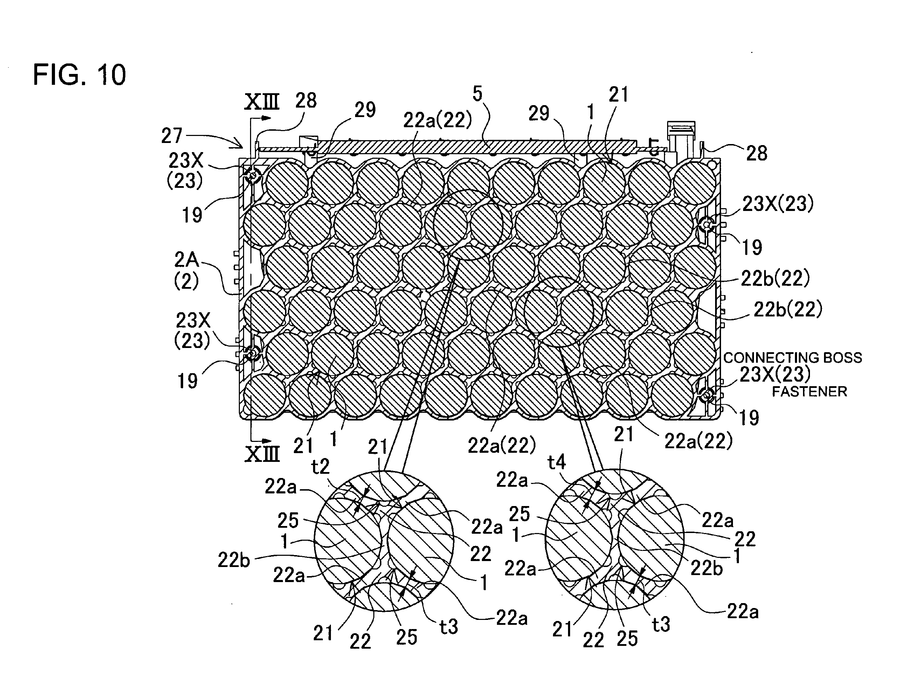

As shown in Figs. 10, 12, and 14, a battery holder 2 is provided with insertion sections 21 separated by dividing walls 22 to insert and hold the batteries 1 in fixed positions. Batteries inserted in the insertion sections 21 make contact with the dividing walls 22 in a thermally coupled manner. Heat generated by the batteries 1 is transferred to, and dissipated in the battery holder 2. The battery holder 2 holds batteries 1 inserted in the insertion sections 21 in fixed positions. The battery holder 2 is fabricated by molding insulating plastic. Since the battery block 10 shown in the figures is provided with sixty batteries 1, the battery holder 2 is shaped with dividing walls 22 that establish sixty insertion sections 21 and is formed entirely from plastic as an integrated structure. The insertion sections 21 have both ends open to allow electrode terminals at the ends of the inserted batteries 1 to be exposed to the outside.

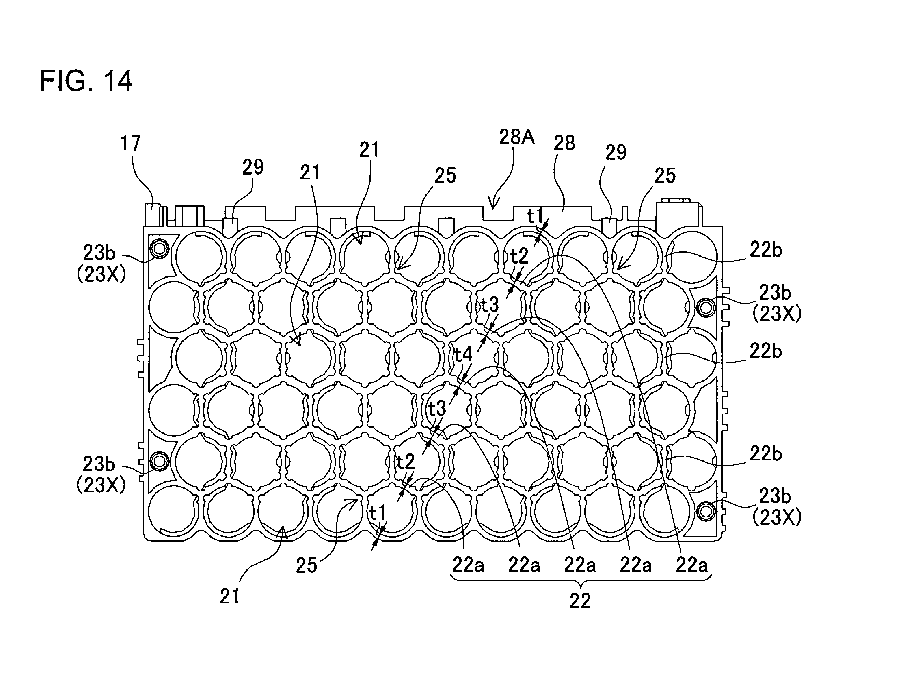

The thickness of the battery holder 2 dividing walls 22 increases from the periphery regions to the center regions. Since the battery block 10 of Figs. 10, 12, and 14 has circular cylindrical batteries 1, the battery holder 2 insertion sections 21 are circular cylinders that conform to the battery 1 surfaces. In this battery holder 2, dividing wall 22 thickness varies with position, and adjacent circular cylindrical battery 1 surfaces are closest in regions where the dividing walls 22 are thinnest. The thin part 22a of the battery holder 2 dividing walls 22 becomes thicker at center regions than at periphery regions. In the battery holder 2 of Fig. 14, the thin part 22a of the dividing walls 22 becomes gradually thicker from the periphery to the center with thickness varying from t₁=1.5mm, to t₂=2.0mm, t₃=2.5mm, and t₄=3.0mm. Although the thin part 22a of the dividing walls 22 in this battery block 10, which has batteries 1 disposed in multiple rows, becomes thicker towards the center row of batteries 1, the thickness of the thin part 22b of dividing walls 22 in the same row is the same. However, the thickness of battery holder dividing walls in the same row can also vary to become thicker at the center than at the periphery.

In a battery holder 2 with thicker dividing walls 22 at the center regions than at the periphery regions, the heat capacity of dividing walls 22 thermally coupled with batteries 1 disposed in center regions is greater than the heat capacity of dividing walls 22 thermally coupled with batteries 1 disposed in periphery regions. This is because the heat capacity of the dividing walls 22 is proportional to the product of their specific heat and volume. Dividing walls 22 with large heat capacity can reduce the temperature rise corresponding to a given amount of heat energy absorbed from the batteries 1. Therefore, by making the heat capacity of dividing walls 22 thermally coupled with batteries 1 disposed in center regions greater than that of dividing walls 22 thermally coupled with batteries 1 disposed in periphery regions, the temperature rise of batteries 1 disposed in the center regions can be reduced. Since heat is radiated to the outside from the periphery regions of the battery holder 22, the temperature of batteries 1 in the periphery regions tends to be lower. In other words, the temperature of batteries 1 in the center regions has a tendency to become higher. However, in a battery holder 2 with higher heat capacity dividing walls 22 in the center regions, the amount of battery 1 heat energy absorbed by dividing walls 22 at the center regions can be increased and the temperature rise of the center region batteries 1 can be reduced. As a result, temperature differences between batteries 1 disposed in the periphery regions and batteries 1 disposed in the center regions can be reduced.

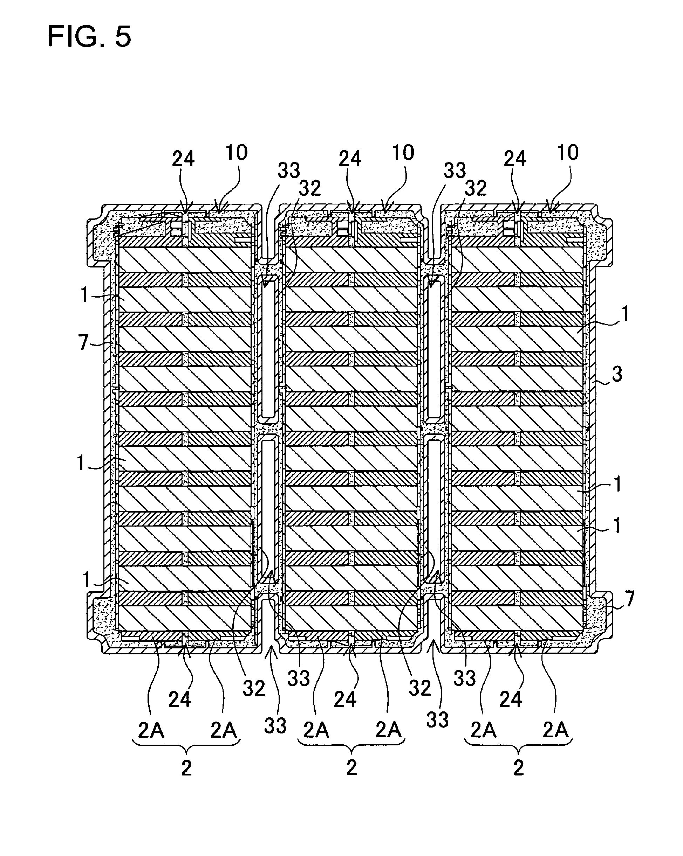

The battery pack of Figs. 4 and 5 has battery blocks 10 inserted in the battery case 3 and those battery blocks 10 are embedded in potting resin 7. All the batteries 1 can be completely embedded in potting resin 7 to thermally couple each battery 1 in an ideal manner with the battery case 3. However, it is not necessary to completely embed all the batteries 1 in potting resin 7. For example, a configuration that leaves part of the top row of batteries 1 just contacting the potting resin 7 is also possible. In a battery pack filled with potting resin 7, potting resin 7 can fill between the batteries 1 and the battery holder 2 insertion sections 21 to thermally couple the batteries 1 and the battery holders 2 in an ideal manner, and to thermally couple the batteries 1 and the battery case 3 in an ideal manner. To smoothly fill battery holder 2 insertion sections 21 without vacancies with potting resin 7 in a viscous fluid state, the battery holder 2 shown in Figs. 9, 11, and 12 is divided into a pair of holder units 2A. In this battery holder 2, the ends of each battery 1 are inserted into the insertion sections 21 of the separated holder units 2A to dispose the batteries 1 in fixed positions. Each holder unit 2A is provided with insertion sections 21 that can accept insertion of approximately half of each battery 1, and each battery 1 is inserted in a pair of holder units 2A to retain it in a fixed position. Further, to smoothly fill without vacancies the space between holder unit 2A insertion sections 21 and batteries 1 with potting resin 7, fasteners 23 are provided to set the relative position for joining the pair of holder units 2A.

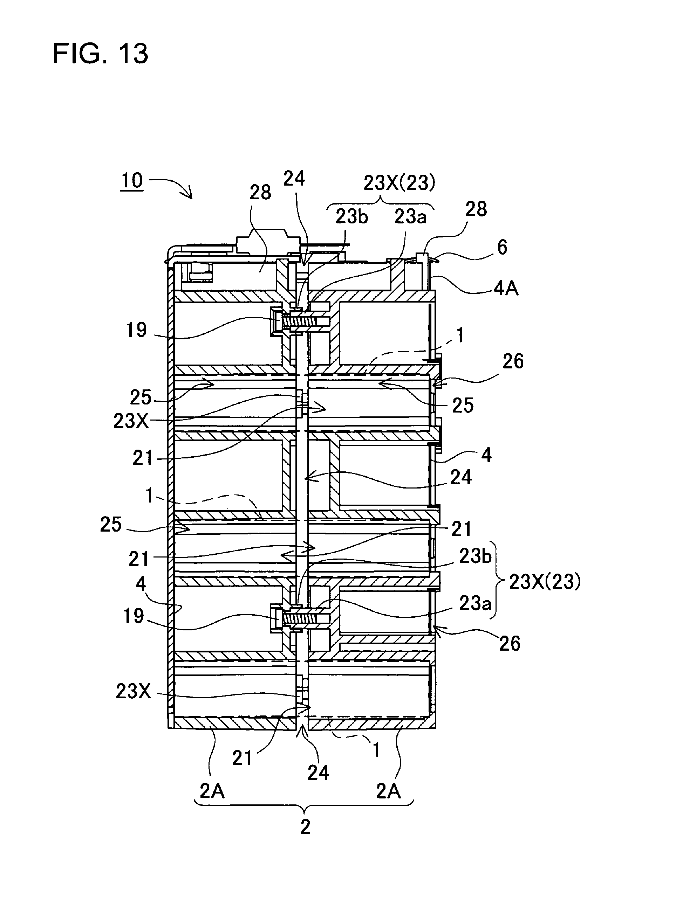

The fasteners 23 are configured to join a pair of holder units 2A in a manner that establishes flow gaps 24 that pass potting resin 7 between opposing surfaces of the holder units 2A. The fasteners 23 join a pair of holder units 2A in a manner that establishes flow gaps 24 between opposing surfaces that are for example, 1 mm to 10mm, preferably 2mm to 8mm, and more preferably 3mm to 6mm. The fasteners 23 shown in Fig. 13 are connecting bosses 23X that protrude from the opposing surfaces of a pair of holder units 2A. The fasteners 23, which are connecting bosses 23X, are formed from plastic in single-piece construction with the holder units 2A. The connecting bosses 23X on one side have connecting projections 23a with circular cylindrical ends, and the ends of the connecting bosses 23X on the other side are provided with connecting cylinders 23b that accept insertion of the connecting projections 23a. These fasteners 23 join a pair of holder units 2A and establish flow gaps 24 by inserting the connecting projections 23a of the connecting bosses 23X on one side into the connecting cylinders 23b of the connecting bosses 23X on the other side. The holder units 2A have connecting bosses 23X established in the four corner regions of their opposing surfaces. The fasteners 23X are established in a plurality of locations to join the holder units 2A while forming flow gaps 24. The size of the flow gaps 24 can be set by the amount of protrusion of the connecting bosses 23X from the opposing surfaces of the holder units 2A. Specifically, the amount of protrusion of the connecting bosses 23X is a height that forms a given flow gap 24 width when the connecting projections 23a are inserted in the connecting cylinders 23b.

A pair of holder units 2A connected via the fasteners 23 described above allows potting resin 7 filling the battery case 3 to flow smoothly from the flow gaps 24 into the insertion sections 21 and fill without forming vacancies. In particular, with long narrow batteries 1 inserted in the insertion sections 21, potting resin 7 can fill between the batteries 1 and the insertion sections 21 without forming vacancies.

Further, as shown by the broken lines indicating battery outlines in Fig. 13, the shape of the inside of each holder unit 2A insertion section 21 tapers from holder unit 2A opposing surfaces, which have flow gaps 24 established, towards the battery 1 end regions. Specifically, by tapering the insides of the insertion sections 21 from the center of the battery holder 2 towards both end regions, potting resin 7 flowing in from the flow gaps 24 can be introduced more smoothly into the insertion sections 21. The insertion sections 21 that dispose the circular cylindrical batteries 1 in fixed positions have circular cylindrical shapes, the inside diameter of the insertion sections 21 becomes smaller from the center region towards both end regions, and the inside diameter of both ends of the insertion sections 21 is approximately equal to the outside diameter of the batteries 1 to retain the batteries 1 accurately in fixed positions. In addition to allowing potting resin 7 to smoothly fill these insertion sections 21, batteries 1 can also be smoothly inserted into each holder unit 2A insertion section 21. Further, with the batteries 1 inserted in the insertion sections 21, both ends of the batteries 1 contact the inside surfaces of the insertion sections 21 to hold the batteries 1 in fixed positions.

Further, as shown in Fig. 10, a battery holder 2 with potting resin 7 that fills the insertion sections 21 can be provided with filling grooves 25 on the insides surfaces of the insertion sections 21 extending in the lengthwise direction of the batteries 1. The filling grooves 25 are provided in a plurality of rows on the inside surface of each insertion section 21. In this battery holder 2, potting resin 7 in a viscous fluid state introduced from the flow gaps 24 between the holder units 2A can flow into the filling grooves 25 to smoothly fill the space between the batteries 1 and the insertion sections 21 without vacancies.

In addition, the battery holder 2 has lead-plates 4 disposed at the openings established at both ends of the insertion sections 21. The lead-plates 4 are disposed outside the insertion sections 21 and are weld-attached to the ends of the batteries 21 exposed outside the open ends of the insertion sections 21. The battery holder 2 of Figs. 9 and 11 is provided with alignment cavities 26 at the open ends of the insertion sections 21 that mate with the lead-plates 4, and the lead-plates 4 are fitted into those alignment cavities 26 and held in fixed positions. The shape of the alignment cavities 26 is made slightly larger than the outline of the lead-plates 4, and the lead-plates 4 are inserted in the alignment cavities 26 and disposed in fixed positions.

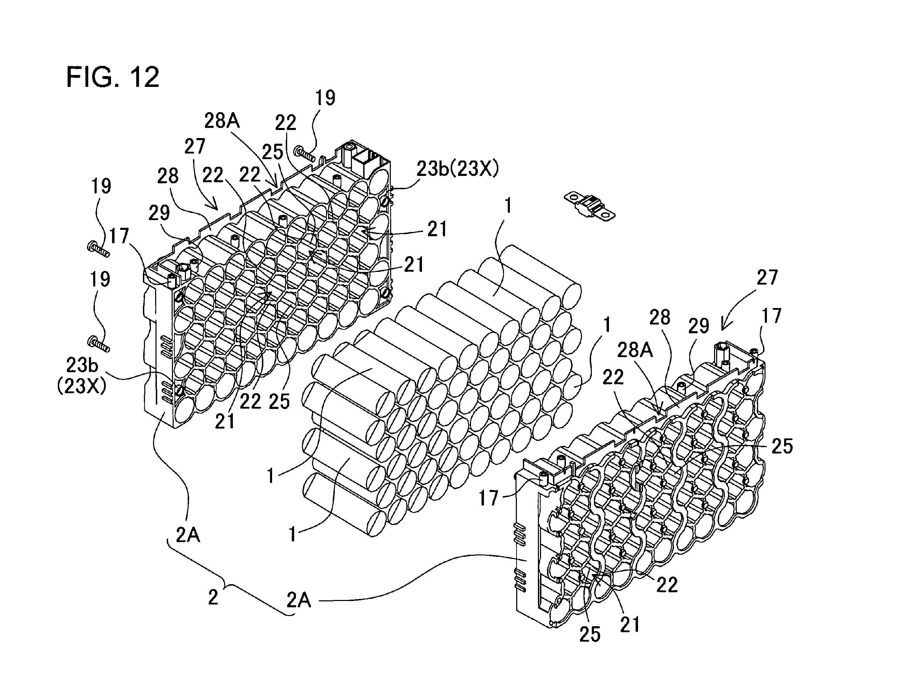

As shown in Fig. 13, a battery holder 2 that is formed in separate pieces is connected by screwing set screws 19 into the connecting bosses 23X, which are formed in single-piece construction. The battery holder 2 of Fig. 12 is provided with connecting bosses 23X formed in single-piece construction at the perimeter of the battery holder 2. The connecting bosses 23X have cylindrical shapes and set screws 19 are inserted inside the cylindrical connecting bosses 23X. However, although not illustrated, a battery holder 2 formed in separate pieces can also be joined in a locking fit configuration, joined by bonding, or joined by a combination of these methods.

Although the battery holder 2 described above is formed from plastic in two separate pieces, the battery pack of the present invention does not limit the battery holder to that structure. The battery holder can also be any other structure that can dispose a plurality of batteries in fixed positions in insertion sections. For example, the battery holder can also be a single piece that does not divide into sub-components, or it can be a structure made up of two or more separate pieces. Further, the battery pack of the present invention does not necessarily require the batteries to be embedded in potting resin. In this type of battery pack, contact surface area of the batteries and the inside surfaces of the battery holder insertion sections is increased to thermally couple the batteries and the battery holder.

The battery block 10 of Figs. 9 and 10 has a circuit board 5 mounted on its top surface. The battery block 10 of the figures, which has batteries 1 oriented horizontally, has the circuit board 5 disposed in a horizontal orientation. The battery holder 2 shown in the figures is provided with a circuit board mounting section 27 that aligns the circuit board 5 in a fixed position. The battery holder 2 shown in the figures has alignment ribs 28 formed in single-piece construction projecting upward around the perimeter of the top surface to establish the circuit board mounting section 27. The battery holder 2 of the figures is a pair of battery holders 2A joined together and alignment ribs 28 are provided around the top surface perimeter edges of each holder unit 2A except along opposing edges. This allows the circuit board 5 to be disposed on the top surface of the battery holder 2. To align and dispose the circuit board 5 inside the alignment ribs 28, the circuit board mounting section 27 alignment rib 28 outline has a shape that conforms to the perimeter of the circuit board 5. Further, the battery holder 2 shown in the figures is provided with connecting bosses 29 formed in single-piece construction that protrude from the top surface. The circuit board 5 is mounted on the connecting bosses 29 via set screws 18 to dispose the circuit board 5 in a position separated from the top surface of the battery holder 2. The circuit board 5 can have electronic components (not illustrated) mounted on the side opposite the battery holder 2 to implement circuitry such as protection circuitry. Although not illustrated, the circuit board can also be mounted on the battery holder in a locking fit configuration instead of using set screws.

Further, in the battery holder 2 of the figures, alignment ribs 28 opposite edges on both sides of the circuit board 5 are provided with cut-outs 28A to run circuit board 5 lead-wires 6 off the circuit board 5. The cut-outs 28A are provided in positions corresponding to the positions of the lead-wires 6 attached to the circuit board 5. In this battery holder 2, by running the lead-wires 6 off both sides of the circuit board 5 through the cut-outs 28A, the lead-wires 6 can be disposed without running them over the tops of the alignment ribs 28. The lead-wires 6 extending off the circuit board 5 through the cut-outs 28A are connected to the connecting tabs 4A on the lead-plates 4 to connect the lead-plates 4 to the circuit board 5.

The circuit board 5 is connected to the batteries 1 via the lead-wires 6 and the lead-plates 4. The circuit board 5 implements circuitry such as control circuitry (not illustrated) that detects the voltage of each battery 1 and controls charging and discharging of the plurality of batteries 1, and protection circuitry (not illustrated) that cuts-off charging and discharging current. The protection circuitry switches a switching device OFF to cut-off discharging current when the voltage of any battery drops below a minimum voltage. Protection circuitry also switches a switching device OFF to stop charging when the voltage of any battery becomes greater than a maximum voltage. A battery pack having protection circuitry implemented to detect the voltage of each battery and control charging and discharging can be operated safely while protecting the batteries 1. Further, the circuit board 5 also implements temperature detection circuitry that detects abnormal battery 1 temperature. Circuit board 5 temperature detection circuitry detects abnormal battery 1 temperature rise and controls battery 1 charging and discharging by operations such as restraining battery 1 charging and discharging current or stopping charging and discharging.

Further, the circuit boards 5 are connected to a primary circuit board 60 mounted on the upper surface of the connecting plate 40 via lead-wires (not illustrated). The primary circuit board 60 implements protection circuitry (not illustrated) that inputs signals from each circuit board 5 and controls battery 1 charging and discharging. Electronic components (not illustrated) are mounted on the primary circuit board 60 to implement circuitry such as switching devices that control discharging current based on signals input from the circuit boards 5, and relay control circuitry that controls battery 1 current. In a battery pack with a primary circuit board 60 connected to a plurality of circuit boards 5 via lead-wires (not illustrated), a switching device can be switched OFF to cut-off battery 1 current when the voltage of any battery 1 becomes greater than a maximum voltage, when the voltage of any battery 1 becomes less than a minimum voltage, when battery 1 temperature becomes greater than a maximum temperature, or when battery 1 temperature becomes less than a minimum temperature. A battery pack, which detects parameters such as the voltage and temperature of each battery 1 and controls battery current, can be safely operated while protecting the batteries 1.

The battery case 3 is fabricated by molding plastic. The battery case 3 of Figs. 4-8 and 15 is formed in a box shape with an open top. This battery case 3 is provided with hollow partitions 32 enclosing hollow regions 33 open at the surfaces of the battery case 3 between adjacent battery blocks 10, and those hollow partitions 32 are disposed in a manner thermally coupled with the battery blocks 10. The hollow partitions 32 are essentially the same height as the battery blocks 10 and are thermally coupled with approximately entire sides of the battery blocks 10. For example, the hollow partitions 32 have a height greater than 80% of the battery block 10 height, and are thermally coupled with approximately entire sides of the battery blocks 10 to dissipate heat from the sides of the battery blocks 10. Both ends of the hollow partitions 32 connect with the inside surfaces of the battery case 3, and are connected to the battery case 3 side-walls 34. As shown in Figs. 4-7, the hollow regions 33 are shaped with open bottoms and sides allowing the hollow partitions 32 to efficiently radiate heat by the effective flow of outside air due to the hollow regions 33. The battery case 3 of the figures houses three battery blocks 10 arranged in parallel orientation and has hollow partitions 32 disposed between the three battery blocks 10 in a manner thermally coupled with each battery block 10. The battery pack of the figures houses a plurality of battery blocks 10 in parallel orientation and is provided with plate-shaped hollow partitions 32 between adjacent battery blocks 10.

Further, the battery case 3 of Fig. 4 is provided with hollow partitions 32 connected to the bottom surface 31. The hollow partitions 32 extend upward from the bottom surface 31 of the battery case 3, and hollow regions 33 open at the bottom are established inside the hollow partitions 32. These hollow partitions 32 are in close proximity to the battery blocks 10 disposed on both sides, are thermally coupled to the battery blocks 10, and radiate battery block 10 heat outside the battery case 3. In particular, the hollow partitions 32 increase the heat radiating surface area in contact with the ambient air to efficiently radiate battery 1 heat to the outside. Further, as a result of the thermal insulating properties of the hollow regions 33, the hollow partitions 32 can suppress conditions that induce thermal runaway of the battery blocks 10 disposed on both sides of the hollow partitions 32. This is because abnormal temperature rise in a battery block 10 on one side of a hollow partition 32 is isolated by the hollow region 33 inside the hollow partition 32.

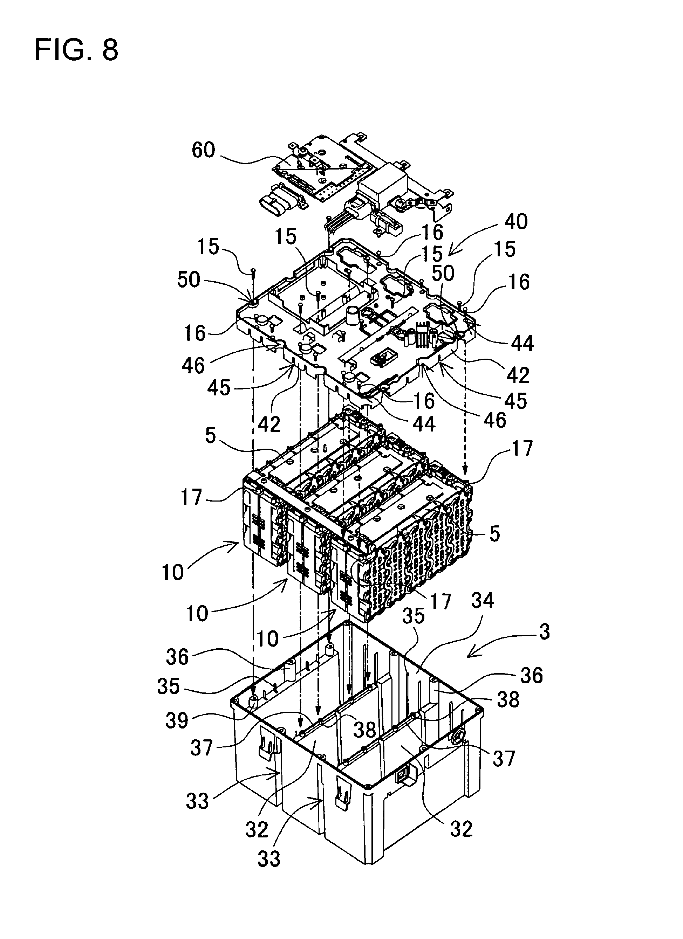

Further, the battery pack of the figures is provided with a connecting plate 40 that connects a plurality of battery blocks 10. As shown in Figs. 4 and 8, the connecting plate 40 is disposed on the top surfaces of the plurality of battery blocks 10, is attached to each battery block 10 via set screws 16, and joins the plurality of battery blocks 10 as a single unit. As shown in Fig. 8, battery block 10 battery holders 2 are provided with connecting bosses 17 protruding from both ends of their top surfaces to screw in set screws 16 passing through the connecting plate 40. Set screws 16 inserted in connecting plate 40 through-holes 44 are screwed into battery holder 2 connecting bosses 17 to connect the plurality of battery blocks 10 as a single-unit structure. Further, since the battery blocks 10 of the figures have circuit boards 5 mounted on their top surfaces, the circuit boards 5 are disposed between the connecting plate 40 and the battery holders 2 and are protected by the connecting plate 40. In this battery pack, the plurality of battery blocks 10 can be joined as a single unit by the connecting plate 40 and housed in the battery case 3 while protecting the circuit boards 5 connected to each battery block 10 with the connecting plate 40.

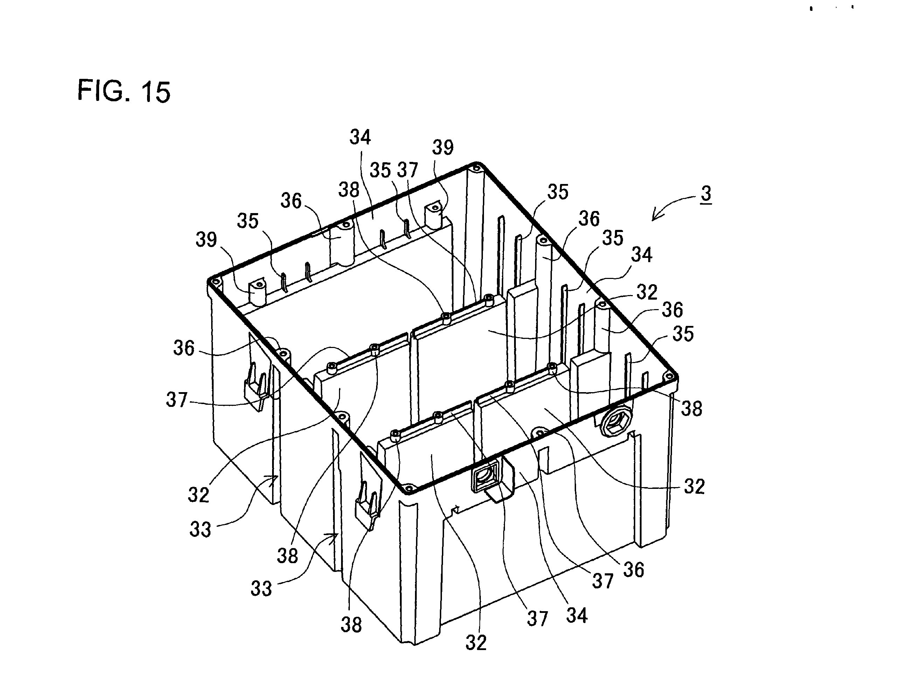

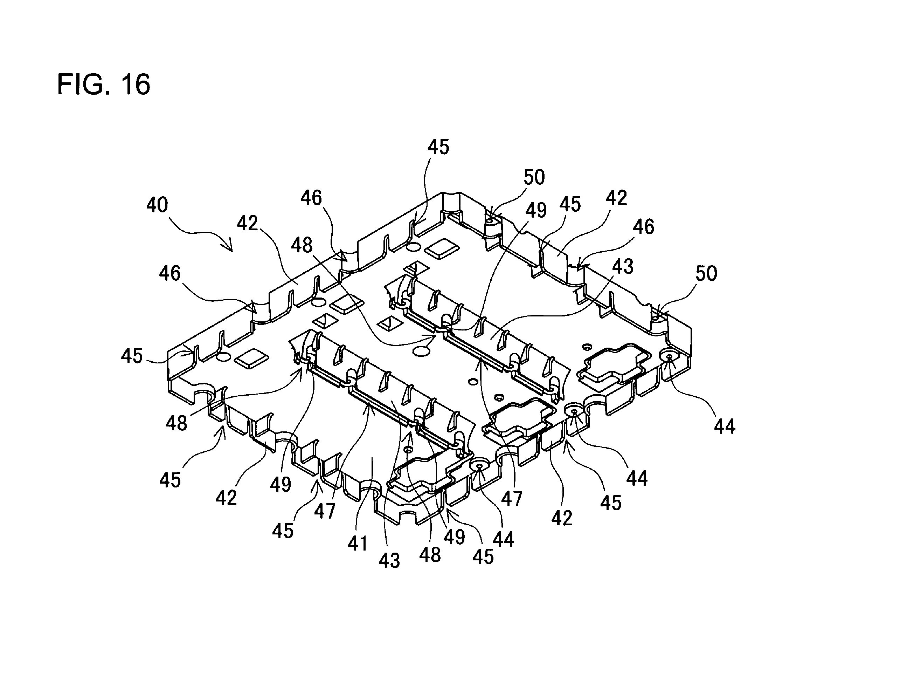

The connecting plate 40 is fabricated by molding plastic. The connecting plate 40 of Fig. 16 has perimeter walls 42 formed in single-piece construction projecting upward and downward along the perimeter of a base plate 41, which is disposed opposite the top surfaces of the plurality of battery blocks 10. The perimeter walls 42 have an outline that conforms to the inside surfaces of the side-walls 34 of the battery case 3 and fits the connecting plate 40 inside the edges of the open region of the battery case 3. The inside surfaces of the side-walls of the battery case 3 of Fig. 15 are provided with integrated alignment ribs 35 extending in the vertical direction, and integrated connecting bosses 36 to connect a case cover 30 that closes-off the open region of the battery case 3. The perimeter walls 42 of the connecting plate 40 shown in Fig. 16 are provided with slits 45 that open downward and mate with the alignment ribs 35, and with perimeter notches 46 for insertion of the connecting bosses 36.

Further, the connecting plate 40 is provided with integrated connecting walls 43 protruding from the bottom surface of the base plate 41 that connect with the battery case 3 hollow partitions 32. Since the inside of the battery case 3 of Fig. 15 is provided with two hollow partitions 32, the connecting plate 40 has two rows of connecting walls 43 established in positions opposite those hollow partitions 32. The connecting plate 40 connecting walls 43 are configured to fit together with the hollow partitions 32 to dispose the connecting plate 40 in a fixed position in the battery case 3. The hollow partitions 32 of the battery case 3 shown in Fig. 15 are provided with integrated insertion ridges 37 protruding from the upper surfaces along the tops of the hollow partitions 32, and integrated partition connecting bosses 38 connected with the insertion ridges 37 to screw in set screws 15 inserted through the connecting plate 40. Further, as shown in Fig. 16, the connecting plate 40 connecting walls 43 are provided with grooves 47 along the bottom ends of the connecting walls 43 to fit with the insertion ridges 37 on the hollow partitions 32. In addition, connecting wall 43 grooves 47 are cut-out at locations corresponding to the partition connecting bosses 38 on the hollow partitions 32 and boss indents 48 are provided to fit together with the partition connecting bosses 38. Through-holes 49 are opened through the centers of the boss indents 48 to accept set screw 15 insertion.

The connecting plate 40 described above is disposed in a fixed position inside the open edges of the battery case 3 by aligning perimeter wall 42 perimeter notches 46 with battery case 3 connecting bosses 36 while inserting battery case 3 alignment ribs 35 in perimeter wall 42 slits 45. Further, while aligning connecting plate 40 connecting wall 43 boss indents 48 with partition connecting bosses 38 on the hollow partitions 32, the hollow partition 32 insertion ridges 37 are inserted in connecting wall 43 grooves 47 to fit the connecting walls 43 and the hollow partitions 32 in an interconnecting configuration. As shown in Fig. 8, set screws 15 inserted through through-holes 49 in the center region of the connecting plate 40 are screwed into partition connecting bosses 38 on the hollow partitions 32, and set screws 15 inserted through through-holes 50 at the edges of the connecting plate 40 are screwed into side-wall connecting bosses 39 provided on the inside surfaces of the side-walls 34 to connect the connecting plate 40 to the battery case 3.

Further, as shown in Figs. 4, 6, and 8, the connecting plate 40 has a primary circuit board 60 mounted on its upper surface. The primary circuit board 60 is connected to the circuit boards 5 mounted on each battery block 10 via lead-wires (not illustrated). The primary circuit board 60 implements protection circuitry (not illustrated) that inputs signals from each circuit board 5 and controls battery 1 charging and discharging. Electronic components (not illustrated) are mounted on the primary circuit board 60 to implement circuitry such as switching devices that control discharging current based on signals input from the circuit boards 5, and relay control circuitry that controls battery 1 current. In a battery pack with a primary circuit board 60 connected to a plurality of circuit boards 5 via lead-wires (not illustrated), a switching device can be switched OFF to cut-off battery 1 current when the voltage of any battery 1 becomes greater than a maximum voltage, when the voltage of any battery 1 becomes less than a minimum voltage, when battery 1 temperature becomes greater than a maximum temperature, or when battery 1 temperature becomes less than a minimum temperature. A battery pack, which detects parameters such as the voltage and temperature of each battery 1 and controls battery current, can be safely operated while protecting the batteries 1.

The plurality of battery blocks 10 are joined as a unit by the connecting plate 40 and held in a battery case 3. A battery case 3 divided by hollow partitions 32 houses a battery block 10 in each partitioned section. The connecting plate 40 that joins the plurality of battery blocks 10 is fit into the open region of the battery case 3 and held in place by set screws 15.

In addition, the battery pack is filled with potting resin 7 in a manner that embeds the battery blocks 10, and more specifically embeds the batteries 1, housed in the battery case 3. The potting resin 7 is a resin such as urethane resin, epoxy resin, or silicone resin that is introduced in the unhardened viscous fluid state to embed the batteries 1 and battery holders 2. In a battery pack with potting resin 7 filling the battery case 3 that holds the battery blocks 10, potting resin 7 adheres closely to the inside surfaces of the battery case 3 without forming vacancies to form ideal thermal coupling between the potting resin 7 and the battery case 3. However, a battery pack with batteries embedded in potting resin can also be formed by inserting the battery blocks in shaping containers, filling the shaping containers with potting resin, removing the battery blocks from the shaping containers after potting resin hardening, and inserting the battery blocks in the battery case. By making the inside shape of the shaping containers equivalent to the inside shape of the battery case, the potting resin can make close contact with the inside surfaces of the battery case. Since the battery blocks embedded in potting resin in this battery pack can be removed from the battery case, it has the feature that maintenance such as battery block replacement can be performed.

The battery pack described above is assembled in the following manner.
(1) As shown in Fig. 12, after inserting all the batteries 1 in the insertion sections 21 of two separate holder units 2A, the holder units 2A are joined to form the battery holder 2. The holder units 2A are joined by the fasteners 23 forming flow gaps 24 in the opposing surfaces. Further, as shown in Fig. 11, lead-plates 4 are weld-attached to the electrode terminals at the ends of each battery 1.
(2) As shown in Fig. 11, a circuit board 5 is mounted on the top surface of the battery holder 2. Set screws 18 are passed through the circuit board 5 to attach the circuit board 5 to the battery holder 2.
(3) The connecting tabs 4A of the lead-plates 4 are connected to the circuit board 5 via the lead-wires 6.
   The assembly steps described above assemble each battery block 10.

(4) As shown in Fig. 8, a plurality of battery blocks 10 is connected to the connecting plate 40. Set screws 16 are passed through the connecting plate 40 and screwed into the connecting bosses 17 on each battery holder 2 of the plurality of battery blocks 10 to connect the battery blocks 10 and connecting plate 40 as a single unit.
(5) The plurality of battery blocks 10 connected by the connecting plate 40 is inserted in the battery case 3. Each battery block 10 is held in a separate partition divided by the hollow partitions 32. The connecting plate 40 fits into a fixed position in the battery case 3 and is held in place by set screws 15. Although the steps above insert the battery blocks 10 into the battery case 3 after the plurality of battery blocks 10 is joined as a single unit by connecting the connecting plate 40, the connecting plate can also be fit in the battery case and connected to each battery block after the plurality of battery blocks has been inserted in the battery case.
(6) As shown in Fig. 4, the battery case 3 is filled with unhardened potting resin 7 in a viscous fluid state.
(7) After hardening the potting resin 7, the case cover 30 is attached to close-off the open region of the battery case 3. The case cover 30 is attached by set screws 14 that pass through the perimeter of the case cover 30 and screw into connecting bosses 36 provided at the open region of the battery case 3.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

### LABELS

- 1: BATTERY
- 2: BATTERY HOLDER
- 2A: HOLDER UNIT
- 3: BATTERY CASE
- 4: LEAD-PLATE
- 4A: CONNECTING TAB
- 5: CIRCUIT BOARD
- 6: LEAD-WIRE
- 7: POTTING RESIN
- 10: BATTERY BLOCK
- 14: SET SCREW
- 15: SET SCREW
- 16: SET SCREW
- 17: CONNECTING BOSS
- 18: SET SCREW
- 19: SET SCREW
- 21: INSERTION SECTION
- 22: DIVIDING WALL
- 22a: THIN PART
- 22b: THIN PART
- 23: FASTENER
- 23X: CONNECTING BOSS
- 23a: CONNECTING PROJECTION
- 23b: CONNECTING CYLINDER
- 24: FLOW GAP
- 25: FILLING GROOVE
- 26: ALIGNMENT CAVITY
- 27: MOUNTING SECTION
- 28: ALIGNMENT RIB
- 28A: CUT-OUT
- 29: CONNECTING BOSS
- 30: CASE COVER
- 31: BOTTOM SURFACE
- 32: HOLLOW PARTITION
- 33: HOLLOW REGION
- 34: SIDE-WALL
- 35: ALIGNMENT RIB
- 36: CONNECTING BOSS
- 37: INSERTION RIDGE
- 38: PARTITION CONNECTING BOSS
- 39: SIDE-WALL CONNECTING BOSS
- 40: CONNECTING PLATE
- 41: BASE PLATE
- 42: PERIMETER WALL
- 43: CONNECTING WALL
- 44: THROUGH-HOLE
- 45: SLIT
- 46: PERIMETER NOTCH
- 47: GROOVE
- 48: BOSS INDENT
- 49: THROUGH-HOLE
- 50: THROUGH-HOLE
- 60: PRIMARY CIRCUIT BOARD
- 91: BATTERY
- 92: BATTERY HOLDING MATERIAL
- 92A: TAB
- 93: COOLING MEDIUM PASSAGEWAY

## Claims

1. A battery pack comprising:
a plurality of batteries (1) that can be charged;
battery holders (2) that dispose the plurality of batteries (1) in fixed positions; and
a battery case (3) that houses battery blocks (10) made up of the battery holders (2) holding the plurality of batteries (1);
**characterized in that**
a plurality of battery blocks (10) are disposed at given intervals in the battery case (3); hollow partitions (32) enclosing hollow regions (33) open at the battery case (3) surfaces are provided between adjacent battery blocks (10); and
the battery blocks (10) are disposed in a manner thermally coupled with the hollow partitions (32).

2. The battery pack as cited in claim 1 wherein the hollow partitions (32) have a height greater than 80% of the battery block (10) height, are thermally coupled with approximately entire sides of the battery blocks (10), and radiate heat away from the sides of the battery blocks (10).

3. The battery pack as cited in claim 1 or 2 wherein both ends of the hollow partitions (32) connect with the inside surfaces of the battery case (3), are connected to opposing battery case (3) side-walls (34), and the hollow regions (33) are shaped with open bottoms and sides.

4. The battery pack as cited in any of claim 1-3 wherein the battery case (3) is filled with potting resin (7) that thermally couples the battery blocks (10) to the battery case (3).

5. The battery pack as cited in any of claim 1-4 wherein the plurality of battery blocks (10) are housed in parallel orientation in the battery case (3), and the hollow partitions (32) are provided between adjacent battery blocks (10).

6. The battery pack as cited in any of claim 1-5 wherein the hollow partitions (32) are connected to the bottom surface of the battery case (3).

7. The battery pack as cited in any of claim 1-6 wherein a connecting plate (40) is provided to connect the plurality of battery blocks (10), battery blocks (10) inserted in the battery case (3) are connected by the connecting plate (40), and the connecting plate (40) is configured to mate with the hollow partitions (32) to dispose the connecting plate (40) in a fixed position in the battery case (3).

8. The battery pack as cited in claim 7 wherein the connecting plate (40) is provided with a base plate (41) disposed opposite the top surfaces of the plurality of battery blocks (10), and perimeter walls (42) formed in single-piece construction projecting upward and downward along the perimeter of the base plate (41); and
the perimeter walls (42) have an outline that conforms to the inside surfaces of the battery case (3) side-walls (34) to fit inside the edges of the open region of the battery case (3).

9. The battery pack as cited in claim 8 wherein the inside surfaces of the battery case (3) side-walls (34) are provided with integrated alignment ribs (35) extending in the vertical direction, and integrated connecting bosses (36) to connect a case cover (30) that closes-off the open region of the battery case (3); the perimeter walls (42) of the connecting plate (40) are provided with slits (45) that open downward and mate with the alignment ribs (35), and with perimeter notches (46) in the surfaces of the perimeter walls (42) for insertion of the connecting bosses (36).

10. The battery pack as cited in claim 7 wherein the connecting plate (40) is provided with integrated connecting walls (43) protruding from the bottom surface of the base plate (41) that connect with the battery case (3) hollow partitions (32).

11. The battery pack as cited in claim 10 wherein the hollow partitions (32) have insertion ridges (37) protruding from the upper surfaces extending lengthwise along the tops of the hollow partitions (32), and the connecting plate (40) connecting walls (43) are provided with grooves (47) along the bottom ends of the connecting walls (43) to fit with the insertion ridges (37) on the hollow partitions (32).

12. The battery pack as cited in claim 7 wherein the battery blocks (10) are provided with circuit boards (5), and the circuit boards (5) are disposed between the battery blocks (10) and the connecting plate (40).

13. The battery pack as cited in any of claim 1-12 wherein the connecting plate (40) has a primary circuit board (60) mounted on its upper surface, the primary circuit board (60) is connected to the circuit boards (5) mounted on each battery block (10), and the primary circuit board (60) implements protection circuitry that controls battery (1) charging and discharging according to signals input from each circuit board (5).

14. The battery pack as cited in claim 4 wherein each battery holder (2) is a pair of separate holder units (2A); the ends of each battery (1) are inserted in the insertion sections (21) of the separate holder units (2A) to dispose the batteries (1) in fixed positions;
fasteners (23) are provided that fix the relative connecting position of the pair of holder units (2A); the fasteners (23) are configured to join the pair of holder units (2A) while establishing flow gaps (24) that pass potting resin (7) through the opposing surfaces of the holder units (2A);
the pair of holder units (2A) is joined via the fasteners (23) establishing flow gaps (24); and potting resin introduced into the battery case (3) flows through the flow gaps (24) into each holder unit (2A) insertion section (21).

15. The battery pack as cited in claim 14 wherein the fasteners (23) are connecting bosses (23X) protruding from opposing surfaces of the pair of holder units (2A); and the connecting bosses (23X) on one side insert in the connecting bosses (23X) on the other side to join the pair of holder units (2A) in a manner that establishes the flow gaps (24).
